(19) Europäisches Patentamt
European Patent Office
Office européen des brevets

(11) EP 3 174 928 B1

(12) **EUROPEAN PATENT SPECIFICATION**

(45) Date of publication and mention of the grant of the patent:
**18.11.2020 Bulletin 2020/47**

(21) Application number: **15766609.0**

(22) Date of filing: **30.07.2015**

(51) Int Cl.:
***C08K 5/134*** *(2006.01)* ***C08K 5/526*** *(2006.01)*

(86) International application number:
**PCT/IB2015/055790**

(87) International publication number:
**WO 2016/016850 (04.02.2016 Gazette 2016/05)**

(54) **COLOR STABLE POLYCARBONATE WITH LONG LIFETIME**

FARBSTABILES POLYCARBONAT MIT LANGER LEBENSDAUER

POLYCARBONATE À COULEUR STABLE PRÉSENTANT UNE LONGUE DURÉE DE VIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2014 EP 14382296**

(43) Date of publication of application:
**07.06.2017 Bulletin 2017/23**

(73) Proprietor: **SABIC Global Technologies B.V.**
**4612 PX Bergen op Zoom (NL)**

(72) Inventor: **SHARIFI, Payman**
**E-30390 La Aljorra (ES)**

(74) Representative: **Sabic Intellectual Property Group**
**Sabic Intellectual Property Department**
**P.O. Box 3008**
**6160 GA Geleen (NL)**

(56) References cited:
**EP-A1- 2 371 877 JP-A- H1 025 407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 174 928 B1

## Description

## BACKGROUND

The present disclosure relates to polycarbonate compositions made by melt processing/polymerization that can be used to make articles that maintain their transparency even at high thicknesses, and maintain their optical properties over a long period of time. Such compositions and articles can be useful for various applications, for example for forming lenses, and optical devices, among others.

Polycarbonates (PC) are synthetic engineering thermoplastic resins, and are a useful class of polymers having many beneficial properties. With their mechanical strength and optical clarity, polycarbonate resins offer many significant advantages and are used for a number of different commercial applications. Their high impact resistance can make polycarbonate an important component in numerous consumer goods such as mobile phones, MP3 players, computers, laptops, etc. Due to its transparency, Bisphenol-A (BPA) polycarbonates can find use in optical media, automotive lenses (e.g., inner lens, forward lens, and so forth), roofing elements, greenhouses, photovoltaic devices, and safety glass.

In certain applications, especially those where the object thickness and hence the light path have considerable length, the requirements of low color and high transparency are more appreciated. Examples of such applications include thick lenses such as found in automotive lighting inner lenses, collimator lenses, light emitting diode (LED) lenses, and light guides. Next to that, such applications also demand that the optical properties are retained over a long time. This is especially true for applications with LED light sources which are guaranteed to have a long lifetime.

Polycarbonates can be produced by melt processing or by interfacial processing. The polycarbonates produced by the melt process have properties and structural features which are different from polycarbonates made by the phosgene process. For example, polycarbonates produced by the melt process can have a melt volume rate (MVR) of 3 to 56 cc/10 min, an endcap content of 65% to 90%, and a Fries content of 300 ppm to 2750 ppm. In contrast, polycarbonates produced by interfacial processing will have an endcap content of 90% to 96%, and a Fries content (defective units in the polycarbonate chain that have salicylate structure) of less than 200 ppm. Interfacial processing also requires the use of phosgene.

Japanese publication number 10025407 discloses a melt polymerized aromatic polycarbonate composition that is prepared by incorporating 1,6-hexandiol-bis[3-(3,5-di-t-butyl-4-hydroxyphenyl)propionate] in an amount of 10 to 1,000 ppm.

It would be desirable to produce a polycarbonate by the melt process which allows for molding or extrusion of objects with a low color and high light transmission that also retain these properties for a long time at a high temperature.

## BRIEF DESCRIPTION

Disclosed herein are polycarbonates produced by melt processing/polymerization that are color stable and have longer lifetimes. The polycarbonate compounds of the present disclosure are made by a melt process and include a hexamethylene-bis[3-(3,5-di-tert-butyl-4-hydroxyphenyl) propionate] antioxidant in an amount of 450 ppm or less; and optionally a phosphite stabilizer. The resulting composition has low color using a lower amount of antioxidant compared to other antioxidants. Also disclosed are articles produced using the polycarbonate compounds.

Disclosed in various embodiments herein are polycarbonate compositions, comprising: a bisphenol A polycarbonate homopolymer formed by a melt process; and a hexamethylene-bis[3-(3,5-di-tert-butyl-4-hydroxyphenyl) propionate] antioxidant in an amount of 450 ppm or less; wherein the composition has a yellowness index (YI) of 1.3 or less when measured at 2.55 mm thickness; a melt volume rate of from 3 to 56 cc/10 min, when measured according to ASTM D1238; an endcap percentage of 65% to 90%; and a Fries content of from 200 ppm to 2750 ppm.

The composition further comprises a phosphite stabilizer. In specific embodiments, the phosphite stabilizer may be tris(2,4-di-tert-butylphenyl)phosphite or bis(2,4-dicumylphenyl) pentaerythritol diphosphite. The composition contains from 50 ppm to 1000 ppm of the phosphite stabilizer. The weight ratio of the hexamethylene-bis[3-(3,5-di-tert-butyl-4-hydroxyphenyl) propionate] antioxidant to the phosphite stabilizer may be from 1:1 to 6:1.

In more specific embodiments, the hexamethylene-bis[3-(3,5-di-tert-butyl-4-hydroxyphenyl) propionate] antioxidant is present in an amount of 50 ppm to 450 ppm, or in an amount of 250 ppm or less (but greater than zero). In particular embodiments, the hexamethylene-bis[3-(3,5-di-tert-butyl-4-hydroxyphenyl) propionate] antioxidant is present in an amount of 50 ppm to 250 ppm.

The composition may have a YI of 0.8 or less.

The melt process used to form the polycarbonate polymer may include the addition of a quenching agent. The amount of the quenching agent added can be from about 0.05 ppm to about 100 ppm based on the total weight of the polycarbonate polymer. The quenching agent may be added along with a carrier to the polycarbonate polymer. The quenching agent can be added to the process after formation of the polycarbonate polymer.

Also disclosed are articles molded from the polycarbonate compositions described above. The article can be,

for example, an automotive inner lens, a collimator lens, an LED lens, or a light guide.

These and other non-limiting aspects of the present disclosure are more particularly described below.

## BRIEF DESCRIPTION OF THE DRAWINGS

The following is a brief description of the drawings, which are presented for the purposes of illustrating the exemplary embodiments disclosed herein and not for the purposes of limiting the same.

**FIG. 1** is a graph of YI (Yellowness Index) obtained with several different antioxidants and different ppm concentrations of the antioxidant.

**FIG. 2** is a graph of YI (Yellowness Index) obtained with some different phenolic antioxidants and different ppm concentrations of the antioxidant.

**FIG. 3** is a graph of YI (Yellowness Index) obtained with some different phenolic antioxidants and different ppm concentrations of the antioxidant when combined with a phosphite stabilizer.

## DETAILED DESCRIPTION

The present disclosure may be understood more readily by reference to the following detailed description of desired embodiments and the examples included therein. In the following specification and the claims which follow, reference will be made to a number of terms which shall be defined to have the following meanings.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any impurities that might result therefrom, and excludes other ingredients/steps.

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values).

As used herein, approximating language may be applied to modify any quantitative representation that may vary without resulting in a change in the basic function to which it is related. Accordingly, a value modified by a term or terms, such as "about" and "substantially," may not be limited to the precise value specified. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. Other meanings of "about" may be apparent from the context, such as rounding off, so, for example "about 1" may also mean from 0.5 to 1.4.

"About" is intended to include the degree of error associated with measurement of the particular quantity based upon the equipment available as of July 30, 2014. The standards and test methods disclosed herein are the version thereof that was most recent as of July 30, 2014, unless specified otherwise.

It should be noted that weight percentage or "wt%", is based on the total weight of the polymeric composition.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The term "aliphatic" refers to a linear or branched array of atoms that is not cyclic and has a valence of at least one. Aliphatic groups are defined to comprise at least one carbon atom. The array of atoms may include heteroatoms such as nitrogen, sulfur, silicon, selenium and oxygen in the backbone or may be composed exclusively of carbon and hydrogen. Aliphatic groups may be substituted or unsubstituted. Exemplary aliphatic groups include, but are not limited to, methyl, ethyl, isopropyl, isobutyl, hydroxymethyl ($-CH_2OH$), mercaptomethyl ($-CH_2SH$), methoxy, methoxycarbonyl ($CH_3OCO-$), nitromethyl ($-CH_2NO_2$), and thiocarbonyl.

The term "alkyl" refers to a linear or branched array of atoms that is composed exclusively of carbon and hydrogen. The array of atoms may include single bonds, double bonds, or triple bonds (typically referred to as alkane, alkene, or alkyne). Alkyl groups may be substituted (i.e. one or more hydrogen atoms is replaced) or unsubstituted. Exemplary alkyl groups include, but are not limited to, methyl, ethyl, and isopropyl. It should be noted that alkyl is a subset of aliphatic.

The term "aromatic" refers to an array of atoms having a valence of at least one and comprising at least one aromatic group. The array of atoms may include heteroatoms such as nitrogen, sulfur, selenium, silicon and oxygen, or may be composed exclusively of carbon and hydrogen. Aromatic groups are not substituted. Exemplary aromatic groups include, but are not limited to, phenyl, pyridyl, furanyl, thienyl, naphthyl and biphenyl.

The term "aryl" refers to an aromatic radical composed entirely of carbon atoms and hydrogen atoms. When aryl is described in connection with a numerical range of carbon atoms, it should not be construed as including substituted aromatic radicals. For example, the phrase "aryl containing from 6 to 10 carbon atoms" should be construed as referring to a phenyl group (6 carbon atoms) or a naphthyl group (10 carbon atoms) only, and should not be construed as including a methylphenyl group (7 carbon atoms). It should be noted that aryl is a subset of aromatic.

The term "cycloaliphatic" refers to an array of atoms which is cyclic but which is not aromatic. The cycloaliphatic group may include heteroatoms such as nitrogen, sulfur, selenium, silicon and oxygen in the ring, or may be composed exclusively of carbon and hydrogen. A cycloaliphatic group may comprise one or more noncyclic components. For example, a cyclohexylmethyl group ($C_6H_{11}CH_2$-) is a cycloaliphatic functionality, which comprises a cyclohexyl ring (the array of atoms which is cyclic but which is not aromatic) and a methylene group (the noncyclic component). Cycloaliphatic groups may be substituted or unsubstituted. Exemplary cycloaliphatic groups include, but are not limited to, cyclopropyl, cyclobutyl, 1,1,4,4-tetramethylcyclobutyl, piperidinyl, and 2,2,6,6-tetramethylpiperydinyl.

The term "cycloalkyl" refers to an array of atoms which is cyclic but is not aromatic, and which is composed exclusively of carbon and hydrogen. Cycloalkyl groups may be substituted or unsubstituted. It should be noted that cycloalkyl is a subset of cycloaliphatic.

In the definitions above, the term "substituted" refers to at least one hydrogen atom on the named radical being substituted with another functional group, such as alkyl, halogen, - OH, -CN, -$NO_2$, -COOH, etc.

The term "perfluoroalkyl" refers to a linear or branched array of atoms that is composed exclusively of carbon and fluorine.

The term "room temperature" refers to a temperature of 23°C.

The "yellowness index" (YI) is a number calculated from spectrophotometric data that describes the change in color of a test sample from clear or white to yellow. A spectrophotometer color analyzer XRITE Color i7 is used for this measurement. The transmittance spectrum of a test sample having a thickness of 2.55 mm is measured at wavelengths of 360 nm to 760 nm. The illuminant is D65, the standard observer function is 10°, and the reference color is air. The YI is calculated using the three tristimulus values from the transmittance spectrum of the sample as follows:

$$4\text{Yellowness Index} = [100(1.28X_{CIE} - 1.06Z_{CIE})]/Y_{CIE}$$

where $X_{CIE}$ is the tristimulus value for Red, $Y_{CIE}$ is the tristimulus value for Green, and $Z_{CIE}$ is the tristimulus value for Blue.

The polycarbonate compositions of the present disclosure have a combination of low yellowness (reduced color) and long lifetime stability. The polycarbonate compositions of the present disclosure include (A) a bisphenol A homopolymer polymer formed by a melt process; (B) a hexamethylene-bis[3-(3,5-di-tert-butyl-4-hydroxyphenyl) propionate] antioxidant; and (C) a phosphite stabilizer. It was surprisingly found that this antioxidant, when used with a polycarbonate, could obtain the same yellowness at much lower concentrations than other antioxidants. In addition, when combined with phosphite stabilizer, the low yellowness could be maintained. This results in polycarbonate compositions having high color stability and long lifetime in terms of degradation of the polycarbonate.

The polycarbonate compositions of the present disclosure include a polycarbonate polymer (A). As used herein, the terms "polycarbonate" and "polycarbonate polymer" mean a polymer having repeating structural carbonate units of the formula (1):

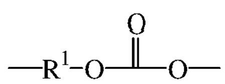

(1)

in which at least about 60 percent of the total number of $R^1$ groups are aromatic organic radicals and the balance thereof are aliphatic, alicyclic, or aromatic radicals. An ester unit (-COO-) is not considered a carbonate unit, and a carbonate unit is not considered an ester unit. In one embodiment, each $R^1$ is an aromatic organic radical, for example a radical of the formula (2):

$-A^1-Y^1-A^2-$ (2)

wherein each of $A^1$ and $A^2$ is a monocyclic divalent aryl radical and $Y^1$ is a bridging radical having one or two atoms that separate $A^1$ from $A^2$. In an exemplary embodiment, one atom separates $A^1$ from $A^2$. Illustrative non-limiting examples of radicals of this type are -O-, -S-, - S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene, cyclohexylidene, or isopropylidene.

Polycarbonates may be produced by the reaction of dihydroxy compounds having the formula $HO-R^1-OH$, wherein $R^1$ is as defined above. Suitable dihydroxy compounds include those of formula (3)

$HO-A^1-Y^1-A^2-OH$ (3)

wherein $Y^1$, $A^1$ and $A^2$ are as described above. Also included are bisphenol compounds of general formula (4):

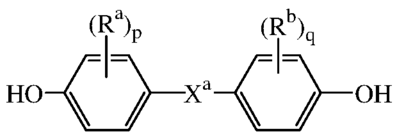
(4)

wherein $R^a$ and $R^b$ each represent a halogen atom or a monovalent hydrocarbon group and may be the same or different; p and q are each independently integers of 0 to 4; and $X^a$ represents one of the groups of formula (5):

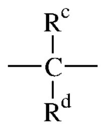
or
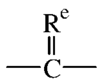
(5)

wherein $R^c$ and $R^d$ each independently represent a hydrogen atom or a monovalent linear or cyclic hydrocarbon group and $R^e$ is a divalent hydrocarbon group.

Various types of bisphenol compounds may be used in making polycarbonate; however, the compounds must be capable of being used under melt polymerization conditions. Bisphenols represented by formula (3) include one or more of the following: 1,1-bis(4-hydroxyphenyl) methane, 1,1-bis(4-hydroxyphenyl)ethane, 2,2-bis(4-hydroxyphenyl) propane (hereinafter "bisphenol-A" or "BPA"), 2,2-bis(4-hydroxyphenyl)butane, 2,2-bis(4-hydroxyphenyl) octane, 1,1-bis(4-hydroxyphenyl)propane, 1,1-bis(4-hydroxyphenyl) n-butane, 2,2-bis(4-hydroxy-1-methylphenyl) propane, 1,1-bis(4-hydroxy-t-butylphenyl) propane, and 2-phenyl-3,3-bis(4-hydroxyphenyl) phthalimidine ("PPPBP").

In other embodiments, branching agents may be added during melt polymerization of the polycarbonate. These branching agents include polyfunctional organic compounds containing at least three functional groups selected from hydroxyl, carboxyl, carboxylic anhydride, and mixtures of the foregoing functional groups. Specific examples include trimellitic acid, trimellitic anhydride, tris-p-hydroxy phenyl ethane (THPE), tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), trimesic acid, and benzophenone tetracarboxylic acid. The branching agents may be added at a level of about 0.05 wt% to about 2.0 wt%.

"Polycarbonate" and "polycarbonate polymer" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula (1), repeating units of formula (6):

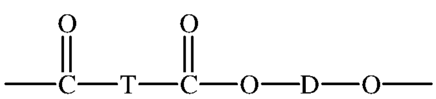
(6)

wherein D is a divalent radical derived from a dihydroxy compound, and may be, for example, a $C_{2-10}$ alkylene radical, a $C_{6-20}$ alicyclic radical, a $C_{6-20}$ aromatic radical or a polyoxyalkylene radical in which the alkylene groups contain 2 to

about 6 carbon atoms, specifically 2, 3, or 4 carbon atoms; and T is a divalent radical derived from a dicarboxylic acid, and may be, for example, a $C_{2-10}$ alkylene radical, a $C_{6-20}$ alicyclic radical, a $C_{6-20}$ alkyl aromatic radical, or a $C_{6-20}$ aromatic radical. In other embodiments, dicarboxylic acids that contain a C4-C36 alkylene radical may be used to form copolymers of formula (6). Examples of such alkylene radicals include adipic acid, sebacic acid, or dodecanoic acid.

In one embodiment, D is a $C_{2-6}$ alkylene radical. In another embodiment, D is derived from an aromatic dihydroxy compound of formula (7):

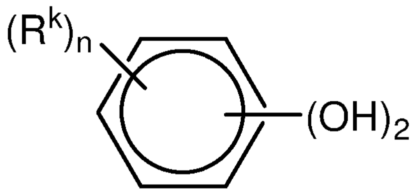

(7)

wherein each $R^k$ is independently a $C_{1-10}$ hydrocarbon group, and n is 0 to 4. The halogen is usually bromine. Examples of compounds that may be represented by the formula (7) include resorcinol, substituted resorcinol compounds such as 5-methyl resorcinol, 5-phenyl resorcinol, 5-cumyl resorcinol, or the like; catechol; hydroquinone; substituted hydroquinones such as 2-methyl hydroquinone, 2-t-butyl hydroquinone, 2-phenyl hydroquinone, 2-cumyl hydroquinone, 2,3,5,6-tetramethyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof.

In other embodiments, poly(alkylene terephthalates) may be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexane-dimethanol-1,4-cyclohexanedicarboxylate) (PCCD), having recurring units of formula (8):

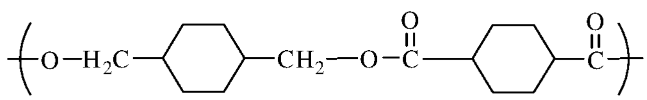

(8)

wherein, as described using formula (6), $R^2$ is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Also included in the phrase "polycarbonate polymer" are polycarbonate-polysiloxane copolymers. These copolymers comprise polycarbonate blocks and polydiorganosiloxane blocks. The polycarbonate blocks in the copolymer comprise repeating structural units of formula (1) as described above, for example wherein $R^1$ is of formula (2) as described above. These units may be derived from reaction of dihydroxy compounds of formula (3) as described above.

The polydiorganosiloxane blocks comprise repeating structural units of formula (9) (sometimes referred to herein as 'siloxane'):

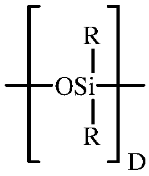

(9)

wherein each occurrence of R is same or different, and is a $C_{1-13}$ monovalent organic radical. For example, R may be a $C_1$-$C_{13}$ alkyl group, $C_1$-$C_{13}$ alkoxy group, $C_2$-$C_{13}$ alkenyl group, $C_2$-$C_{13}$ alkenyloxy group, $C_3$-$C_6$ cycloalkyl group, $C_3$-$C_6$ cycloalkoxy group, $C_6$-$C_{10}$ aryl group, $C_6$-$C_{10}$ aryloxy group, $C_7$-$C_{13}$ aralkyl group, $C_7$-$C_{13}$ aralkoxy group, $C_7$-$C_{13}$ alkaryl group, or $C_7$-$C_{13}$ alkaryloxy group. Combinations of the foregoing R groups may be used in the same copolymer. Generally, D may have an average value of 2 to about 1000, specifically about 2 to about 500, more specifically about 5 to about 200, and more specifically about 10 to about 75. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer. It should be noted that the siloxane blocks in a polycarbonate-polysiloxane copolymer have a distribution of chain lengths, and that D is an average value.

In one embodiment, the polydiorganosiloxane blocks are provided by repeating structural units of formula (10):

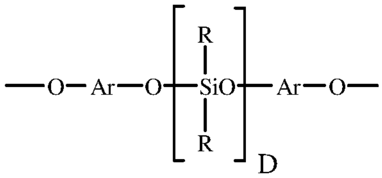

(10)

wherein D is as defined above; each R may be the same or different, and is as defined above; and Ar may be the same or different, and is a substituted or unsubstituted $C_6$-$C_{30}$ arylene radical, wherein the bonds are directly connected to an aromatic moiety. Suitable Ar groups in formula (10) may be derived from a $C_6$-$C_{30}$ dihydroxyarylene compound, for example a dihydroxyarylene compound of formula (3), (4), or (7) above. Combinations comprising at least one of the foregoing dihydroxyarylene compounds may also be used.

Such units may be derived from the corresponding dihydroxy compound of the following formula (11):

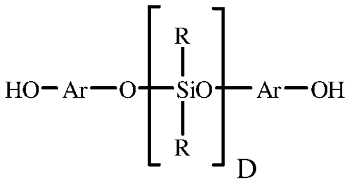

(11)

wherein Ar and D are as described above. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (12):

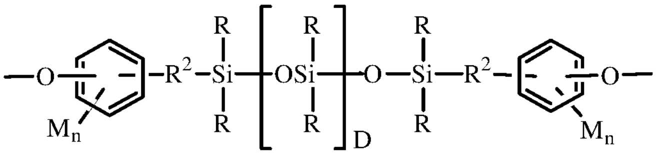

(12)

wherein R and D are as defined above. $R^2$ in formula (12) is a divalent $C_2$-$C_8$ aliphatic group. Each M in formula (12) may be the same or different, and may be cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$ aralkoxy,

$C_7$-$C_{12}$ alkaryl, or $C_7$-$C_{12}$ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl, or tolyl; $R^2$ is a dimethylene, trimethylene or tetramethylene group; and R is a $C_{1-8}$ alkyl, haloalkyl such as trifluoropropyl, cyanoalkyl, or aryl such as phenyl or tolyl. In another embodiment, R is methyl, or a mixture of methyl and phenyl. In still another embodiment, M is methoxy, n is one, $R^2$ is a divalent $C_1$-$C_3$ aliphatic group, and R is methyl.

These units may be derived from the corresponding dihydroxy polydiorganosiloxane (13):

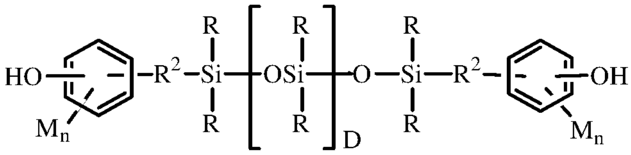

(13)

wherein R, D, M, $R^2$, and n are as described above.

Such dihydroxy polysiloxanes can be made by effecting a platinum catalyzed addition between a siloxane hydride of the formula (14),

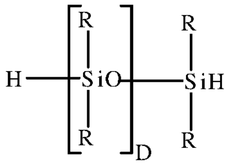

(14)

wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

The siloxane blocks may make up from greater than zero to about 25 wt% of the polycarbonate-polysiloxane copolymer, including from about 4 wt% to about 25 wt%, from about 4 wt% to about 10 wt%, or from about 15 wt% to about 25 wt%, or from about 6 wt% to about 20 wt%. The polycarbonate blocks may make up from about 75 wt% to less than 100 wt% of the block copolymer, including from about 75 wt% to about 85 wt%. It is specifically contemplated that the polycarbonate-polysiloxane copolymer is a diblock copolymer. The polycarbonate-polysiloxane copolymer may have a weight average molecular weight (Mw) of from about 28,000 to about 32,000. Generally, the amount of the polycarbonate-polysiloxane copolymer is sufficient for the overall polycarbonate blend to contain from about 2 wt% to about 5 wt% of siloxane. For example, if the polycarbonate-polysiloxane copolymer contains 20 wt% of siloxane, the blend may contain from about 14 to about 24 wt% of the polycarbonate-polysiloxane copolymer.

The polycarbonates (A) generally include an endcapping agent. The endcapping agent can be a phenol, such as tert-butylphenol (TBP) or paracumyl phenol (PCP), or other similar compounds known in the art.

In specific embodiments of the present disclosure, the polycarbonate polymer (A) is derived from a dihydroxy compound having the structure of Formula (I):

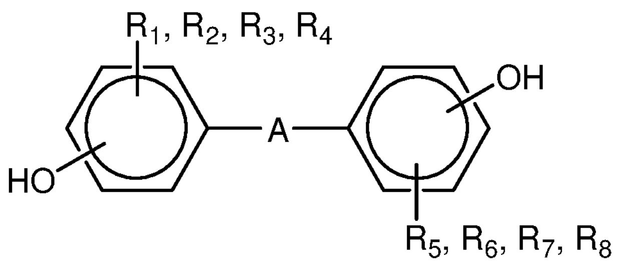

**Formula (I)**

wherein $R_1$ through $R_8$ are each independently selected from hydrogen, nitro, cyano, $C_1$-$C_{20}$ alkyl, $C_4$-$C_{20}$ cycloalkyl, and $C_6$-$C_{20}$ aryl; and A is selected from a bond, -O-, -S-, $-SO_2-$, $C_1$-$C_{12}$ alkyl, $C_6$-$C_{20}$ aromatic, and $C_6$-$C_{20}$ cycloaliphatic.

In specific embodiments, the dihydroxy compound of Formula (I) is 2,2-bis(4-hydroxyphenyl) propane (i.e.

bisphenol-A or BPA). Other illustrative compounds of Formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1 -biphenyl; 4,4'-dihydroxydiphenylether; 4,4'-dihydroxydiphenylthioether; and 1,3 -bis(2-(4-hydroxyphenyl)-2-propyl)benzene.

The polycarbonate polymer (A) is a bisphenol-A homopolymer produced by the melt process. The polycarbonate polymer may have a weight average molecular weight (Mw) of from about 15,000 to about 80,000 daltons, according to polystyrene standards based on GPC, including a range of from about 15,000 to about 22,000 daltons, or from about 30,000 to about 80,000 daltons.

In other embodiments, the composition can contain a linear and branched polycarbonate resin, however, at least one resin must be derived from a melt polycarbonate process.

In some embodiments of the present disclosure, the polycarbonate composition includes two or more polycarbonate polymers, i.e. a first polycarbonate polymer (A1) and a second polycarbonate polymer (A2). The two polycarbonate polymers may have the same or different monomers. In one embodiment, the first polycarbonate polymer has a greater weight average molecular weight than the first polycarbonate polymer.

The polycarbonate is made by a melt polymerization process, which can be a continuous melt process. Generally, in a melt polymerization process, polycarbonates can be prepared by co-reacting, in a molten state, a dihydroxy reactant and a diaryl carbonate (herein also referred to as a diaryl carbonate ester), such as diphenyl carbonate. A useful melt process for making polycarbonates could also use a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl) carbonate, bis(methylsalicyl) carbonate, bis(4-methylcarboxylphenyl) carbonate, bis(2-acetylphenyl) carboxylate, bis(4-acetylphenyl) carboxylate, or a combination comprising at least one of the foregoing esters. The diaryl carbonate ester to dihydroxy reactant can be present in a molar ratio of 2:1 to 1:2, specifically in a molar ratio of 1.5:1 to 1:1.5, more specifically in a molar ratio of 1.05:1 to 1:1.05, even more specifically in a molar ratio of 1:1.

In addition, transesterification catalyst(s) can be employed. Transesterification catalysts used in the melt transesterification polymerization production of polycarbonates can include alpha and/or beta catalysts. Beta catalysts are typically volatile and degrade at elevated temperatures. Beta catalysts are therefore preferred for use at early low-temperature polymerization stages. Alpha catalysts are typically more thermally stable and less volatile than beta catalysts. However, certain types of beta catalysts are stable along the polymerization process conditions (including the high temperatures and reduced pressures) and can be used solely or also in combination with an alpha catalyst. In particular embodiments, an alpha catalyst and a beta catalyst are used. In other embodiments, only a beta catalyst is used, and no alpha catalyst is used.

The alpha catalyst is an alkali or alkaline earth metal hydroxide, an alkali or alkaline earth metal salt of a carboxylic acid, or an alkali or alkaline earth metal salt of a non-volatile inorganic acid. Exemplary alkali metal hydroxides include lithium hydroxide, sodium hydroxide, and potassium hydroxide. Exemplary alkaline earth metal hydroxides include magnesium hydroxide and calcium hydroxide. Exemplary salts of carboxylic acids include sodium acetate and derivatives of ethylene diamine tetraacetic acid (EDTA) such as EDTA tetrasodium salt, or EDTA magnesium disodium salt. Exemplary salts of a non-volatile inorganic acid include $NaH_2PO_3$, $NaH_2PO_4$, $Na_2HPO_3$, $KH_2PO_4$, $CsH_2PO_4$, and $Cs_2HPO_4$; and mixed alkali metal salts of phosphoric acid such as $NaKHPO_4$, $CsNaHPO_4$, and $CsKHPO_4$. The alpha catalyst typically will be used in an amount sufficient to provide 1 x $10^{-2}$ to 1 x $10^{-8}$ moles, specifically, 1 x $10^{-4}$ to 1 x $10^{-7}$ moles of metal hydroxide per mole of the dihydroxy compounds employed.

Beta catalysts can include a quaternary ammonium compound, a quaternary phosphonium compound, or a combination thereof. The quaternary ammonium compound can be an organic ammonium compound having the structure $N(R_m)_4{}^+X$, wherein each $R_m$ is independently $C_{1-20}$ alkyl, $C_{4-20}$ cycloalkyl, or $C_{6-20}$ aryl; and X is an organic or inorganic anion such as hydroxide, halide, carboxylate, sulfonate, sulfate, formate, carbonate, or bicarbonate. Exemplary quaternary ammonium compounds are tetramethyl ammonium hydroxide, tetrabutyl ammonium hydroxide, tetramethyl ammonium acetate, tetramethyl ammonium formate, and tetrabutyl ammonium acetate.

The quaternary phosphonium compound can be an organic phosphonium compound having the structure $P(R_m)_4{}^+X$, wherein each $R_m$ is independently $C_{1-20}$ alkyl, $C_{4-20}$ cycloalkyl, or $C_{6-20}$ aryl; and X is an organic or inorganic anion such as hydroxide, halide, carboxylate, sulfonate, sulfate, formate, carbonate, or bicarbonate. Exemplary quaternary phosphonium compounds include tetramethyl phosphonium hydroxide, tetramethyl phosphonium acetate, tetramethyl phosphonium formate, tetrabutyl phosphonium hydroxide, and tetraphenyl phosphonium phenoxide.

The amount of beta catalyst employed is typically based upon the total number of moles of dihydroxy compound employed in the polymerization reaction. When referring to the ratio of beta catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of beta catalyst (e.g., organic ammonium or phosphonium salts) employed typically will be 1 x $10^{-2}$ to 1 x $10^{-5}$, specifically 1 x $10^{-3}$ to 1 x $10^{-4}$ moles

per total mole of the dihydroxy compounds in the reaction mixture.

In further embodiments, a quenching agent is added to affect the color stability of the polycarbonate polymer produced by a melt polymerization process. A quenching agent inhibits the activity of any residual catalyst that may be present and reduces degradation of the polycarbonate polymer. The quenching agent can be added after the reaction of the polycarbonate is completed, or can be added to an intermediate polycarbonate prior to subjecting the reaction mixture to high temperature and high vacuum for the removal of byproduct phenol, unreacted monomer, and short oligomers. Preferably, the quenching agent provides a transparent/translucent and colorless product.

Quenching agents can include materials that are sometimes used as stabilizers. Quenching agents can include molecules having both at least one amino group and at least one acid group or acid ester group. The acid / acid ester group can be a Lewis acid, Bronsted acid, or an ester of a strong acid. The amino group can be primary secondary, tertiary, or quaternary ammonium. Examples of such molecules include N-(2-hydroxyethyl)piperazine-N'-3-propanesulfonic acid; 1,4-piperazine bis(ethanesulfonic acid); and 5-dimethylamino-1-napthalenesulfonic acid. Other quenching agents can include sulfonic acid esters, such as n-butyl tosylate; benzoic anhydride, benzoic acid, triethyl ortho acetate, tosylic acid; a Bronsted acid, Lewis acid, and an ester of a strong acid.

Examples of Bronsted acid compounds include phosphoric acid, phosphorous acid, hypophosphorous acid, pyrophosphoric acid, poly-phosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, benzoic anhydride, formic acid, acetic acid, citric acid, glutamic acid, salicyclic acid, nicotic acid, fumaric acid, maleic acid, oxalic acid, benzene-sulfinic acid, toluenesulfinic acid, and sulfonic acids such as benzenesulfonic acid, p-toluenesulfonic acid, trifluoromethane sulfonic acid, naphthalene napthalene sulfonic acid, sulfonated polystyrene, and methyl acrylate-sulfonated styrene copolymer.

Examples of esters of strong acids include compounds such as dimethyl sulfonate, triethyl ortho acetate, diethyl sulfonate, methyl, ethyl, butyl, octyl or phenyl ester of p-toluenesulfonic acid, and methyl, ethyl, butyl, octyl or phenyl ester of benzenesulfonic acid.

Other transesterification quenchers include acidic phosphate salts, acid phosphites, alkyl phosphites, aryl phosphites, mixed phosphites; mono-and di-hydrogen phosphonates and their metal salts; and pyrophosphates and their metal salts. Acidic phosphate salts include sodium dihydrogen phosphate, mono zinc phosphate, potassium hydrogen phosphate, calcium dihydrogen phosphate, and the like. Other examples include phosphoric acid, transition metal phosphates, zinc phosphate, monozinc phosphate, calcium phosphate, phosphoric acid, and phosphorous acid.

The quenching agent can be used in a powder carrier or in a non-powder carrier, such as liquid carrier or solid pellets containing the quenching agent. Exemplary liquid carriers can include propylene carbonate, anisole, toluene, melted pentaerythritol tetrastearate (PETS), glycerol monostearate (GMS), and glycerol tristearate (GTS).

The quenching agent may be employed in amounts of about 0.05 parts per million by weight (ppm) to about 100 ppm based on the total weight of the polycarbonate polymer. Within this range it is preferable for the catalyst quenching agent to be used in an amount less than or equal to about 50 ppm, more preferably less than or equal to about 10 ppm. Also within this range it is preferable for the catalyst quenching agent to be used in an amount greater than or equal to about 0.1 ppm, more preferably greater than or equal to about 0.5 ppm. For example, quenching agent can be employed in an amount of 0.5 to 15 ppm, specifically, 1 to 10 ppm, more specifically, 1.5 to 5 ppm, even more specifically, 1.5 to 3 ppm based on the total weight of the polycarbonate polymer.

Polycarbonate prepared by melt polymerization frequently contains Fries product. The Fries rearrangement is an undesirable side reaction that occurs during the preparation of polycarbonate using the melt process. Generally, a Fries rearrangement occurs when an aryl carbonate group rearranges to become a hydroxyl-substituted phenyl salicylate ester. The hydroxyl group can then undergo polymerization, and serves as a site for branching of the polycarbonate, which affects flow and other properties of the polycarbonate. Although low levels of Fries products may be tolerated in polycarbonates, the presence of high levels is generally undesirable because it leads to variations in melt behavior, color and mechanical properties, and can lead to darkening of the resin over time. The level of Fries product can be calculated by measuring the total Fries product content on a mass percentage basis of the polycarbonate by hydrolysis to yield monomer units, followed by methanolysis of all Fries containing units and subsequent high-performance liquid chromatography (HPLC) measurement. The mole ratio of branched to unbranched is measured by NMR. The content of branched Fries products is thus the total Fries products multiplied by this mole ratio.

The polycarbonate compositions of the present disclosure also include a hexamethylene-bis[3-(3,5-di-tert-butyl-4-hydroxyphenyl) propionate] antioxidant (B), which may be abbreviated herein as HM-BDTBHP. This antioxidant has CAS# 35074-77-2, and is depicted below with the structure of Formula (II):

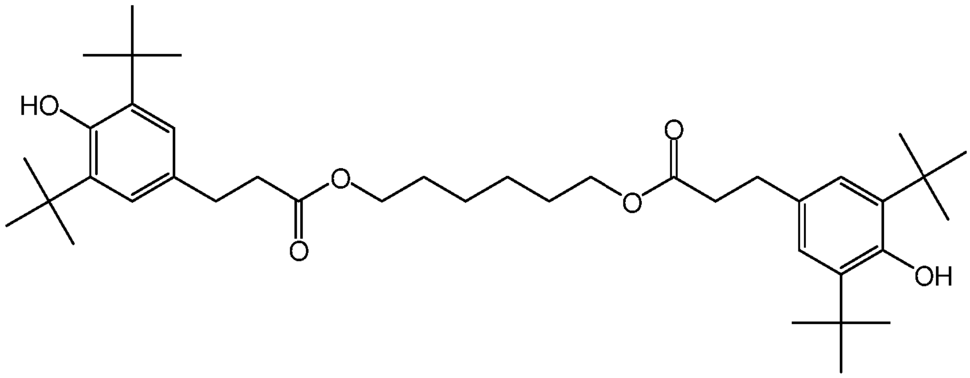

**Formula (II)**

The hexamethylene-bis[3-(3,5-di-tert-butyl-4-hydroxyphenyl) propionate] antioxidant (B) is typically present at a concentration of 450 ppm or less relative to the polycarbonate polymer (A), including 250 ppm or less, or 50 ppm to 450 ppm, or 50 ppm to 250 ppm. The antioxidant (B) is commercially available as Irganox™ 259 from BASF, or as Songnox™ 2590 from Songwon.

The composition includes a phosphite stabilizer (C). Some phosphite stabilizers include pentaerythritol diphosphite stabilizers having the structure of Formula (III):

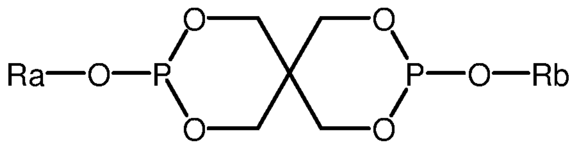

**Formula (III)**

wherein Ra and Rb are arylalkyl or arylalkylaryl.

The term "arylalkyl" refers to an aryl radical substituted with at least one alkyl radical. An example of an arylalkyl radical is tert-butyl-phenyl, $-C_6H_5-C(CH_3)_3$.

The term "arylalkylaryl" refers to an aryl radical substituted with at least one alkyl radical that itself is substituted with at least one aryl radical. An example of an arylalkylaryl radical is 2,4-dicumylphenyl.

One exemplary pentaerythritol diphosphite stabilizer is bis(2,4-dicumylphenyl) pentaerythritol diphosphite, CAS# 154862-43-8, which is offered commercially as DOVERPHOS™ S-9228, and has a minimum melting point of 225°C. Another exemplary phosphite stabilizer is Irgafos™ 168, which is tris (2,4-di-tert-butylphenyl) phosphite, has CAS# 31570-04-4, and has a melting point of 183-186°C. Other phosphite stabilizers may include tris(nonylphenyl)phosphite, triphenyl phosphite, tris(2,6-dimethylphenyl) phosphite, and tris(mixed mono- and di-nonylphenyl)phosphite. The phosphite stabilizer is used in the composition in amounts of 50 ppm to 1,000 ppm (mass fraction) relative to the polycarbonate polymer (A), including from 150 ppm to 700 ppm or from 200 ppm to 400 ppm. Alternatively, the weight ratio of the hexamethylene-bis[3-(3,5-di-tert-butyl-4-hydroxyphenyl) propionate] antioxidant (B) to the phosphite stabilizer (C) may be from 1:1 to 6:1.

In particular embodiments, it is contemplated that the polycarbonate composition will comprise the polycarbonate polymer (A), the HM-BDTBHP antioxidant (B), and the phosphite antioxidant (C).

Other additives ordinarily incorporated in polycarbonate blends of this type can also be used, with the proviso that the additives are selected so as to not significantly adversely affect the desired properties of the polycarbonate. Combinations of additives can be used. Such additives can be mixed at a suitable time during the mixing of the components for forming the composition. In embodiments, one or more additives are selected from at least one of the following: mold release agents, gamma-stabilizing agents, and anti-drip agents.

The polycarbonate produced by the melt process have a melt volume rate (MVR) of 3 to 56 cc/10 min when measured according to ASTM D1238. The endcap percentage from 65% to 90%. The Fries content ranges from 200 ppm to 2750 ppm, including from 300 ppm to 1,000 ppm.

The polycarbonate compositions of the present disclosure have low yellowness, as measured by the yellowness index (YI) on a plaque at 2.55 mm thickness. The polycarbonate compositions have a YI of 1.3 or less, including a YI of 1.0 or less, or a YI of 0.8 or less. The YI was measured prior to weathering or aging tests being conducted.

The polycarbonate compositions of the present disclosure have light transmission, as measured according to ASTM D1003 on a plaque at 2.55 mm thickness. In embodiments, the polycarbonate compositions have a light transmission (%LT) of 90% or higher, including 95% or higher.

The polycarbonate compositions of the present disclosure may have any combination of these properties (MVR,

endcap percentage, Fries, YI, %LT), and any combination of the listed values for these properties. It should be noted that some of the properties are measured using articles made from the polycarbonate composition; however, such properties are described as belonging to the polycarbonate composition for ease of reference.

The polycarbonate compositions of the present disclosure may be molded into pellets. The compositions may be molded, foamed, or extruded into various structures or articles by known methods, such as injection molding, overmolding, extrusion, rotational molding, blow molding and thermoforming. They can be used in various products and applications such as extruded articles, automotive parts that require high transparency, ophthalmic parts such as lenses, and optical-quality films. Some specific examples of such articles include thick lenses such as found in automotive lighting inner lenses, collimator lenses, light emitting diode (LED) lenses, and light guides. For example, the article can be a hard-coated forward lens (e.g. a forward lens of a vehicle that is coated on the outside with a hard-coat and optionally coated on the inner side with an anti-fog coating).

In some embodiments, hard coatings can include coatings that provide a Tabor Abrasion Delta Haze, as measured after 100 cycles using 500 gram load and CS-10F Taber abrasion wheel under ASTM D 1044-08 of less than or equal to 10 percent, for example, less than or equal to 5 percent, or less than or equal to 2 percent. Examples of some possible hard coatings include a silicone hard-coat, a polyurethane coating, and an acrylic coating or combinations comprising at least one of the foregoing, e.g., a silicon hard-coat. Examples of a silicone hard coat include AS4000, AS4700, and PHC587 commercially available from Momentive Performance Materials; Exatec™ SHX commercially available from Exatec LLC; MP-101 commercially available from SDC Technologies, Inc., Anaheim, CA.

The following examples are provided to illustrate the polycarbonate compositions of the present disclosure. The examples are merely illustrative and are not intended to limit the disclosure to the materials, conditions, or process parameters set forth therein.

## EXAMPLES

**METHODS:** Table 1 lists the names and descriptions of the ingredients used in the following Examples.

| Table 1 | | | |
|---|---|---|---|
| **Ingredient** | **Description** | **Mw (g/mol)** | **Trade name** |
| PC 102 | Bisphenol-A homopolymer made by melt polymerization, from SABIC Innovative Plastics US LLC | 58,000-61,000 as measured by GPC-polystyrene standards | |
| Masterbatch 1 | bisphenol-A homopolymer containing 180 ppm glycerol monostearate, 440 ppm pentaerythritol tetrastearate, and 100 ppm IRGAFOS 168 (CAS# 31570-04-4) | ~55,000 | |
| AO 1010 | Phenolic antioxidant, pentaerythritol tetrakis[3-(3,5-di-tert-butyl-4-hydroxyphenyl) propionate], CAS# 6683-19-8 | 1178 | IRGANOX 1010 |
| AO 1024 | Phenolic antioxidant, 2',3-bis[[3-[3,5-di-tert-butyl-4-hydroxyphenyl] propionyl]] propionohydrazide, CAS# 32687-78-8 | 553 | IRGANOX 1024 |
| AO 1035 | Phenolic antioxidant, thiodiethylene bis[3-(3,5-di-tert-butyl-4-hydroxyphenyl) propionate], CAS# 41484-35-9 | 643 | IRGANOX 1035 |
| AO 1076 | Phenolic antioxidant, octadecyl-3-(3,5-di-tert-butyl-4-hydroxyphenyl) propionate, CAS# 2082-79-3 | 531 | IRGANOX 1076 |
| AO 1098 | Phenolic antioxidant, N,N'-hexane-1,6-diyl-bis[3-(3,5-di-tert-butyl-4-hydroxyphenylpropionamide)], CAS# 23128-74-7 | 637 | IRGANOX 1098 |
| AO 1330 | Phenolic antioxidant, 1,3,5-trimethyl-2,4,6-tris(3,5-di-tert-butyl-4-hydroxybenzyl) benzene, CAS# 1709-70-2 | 775 | IRGANOX 1330 |
| AO 1790 | Phenolic antioxidant, 1,3,5-tris(2,6-dimethyl-3-hydroxy-4-tert-butyl-benzyl) isocyanurate, CAS# 40601-76-1 | 700 | SONGNOX 1790 |

(continued)

| Table 1 | | | |
|---|---|---|---|
| **Ingredient** | **Description** | **Mw (g/mol)** | **Trade name** |
| AO 2450 | Phenolic antioxidant, triethylene glycol bis[3-(3-tert-butyl-4-hydroxy-5-methylphenyl) propionate], CAS# 36443-68-2 | 587 | SONGNOX 2450 |
| 1-259 | Phenolic antioxidant, hexamethylene-bis[3-(3,5-di-tert-butyl-4-hydroxyphenyl) propionate], CAS# 35074-77-2 | 630 | IRGANOX 259 |
| AO 2590 | Phenolic antioxidant, hexamethylene-bis[3-(3,5-di-tert-butyl-4-hydroxyphenyl) propionate], CAS# 35074-77-2 | 630 | SONGNOX 2590 |
| 1-168 | Phosphite stabilizer, tris(2,4-di-tert-butylphenyl) phosphite, CAS# 31570-04-4 | 647 | IRGAFOS 168 |
| DS-9228 | Diphosphite stabilizer, bis(2,4-dicumylphenyl) pentaerythritol diphosphite, CAS# 154862-43-8 | 852 | DOVERPHOS S-9228 |

Samples were prepared through various steps, which include (A) extrusion, (B) drying, (C) injection molding, (D) heat aging, and (E) color measurement. Detailed compound formulations and results are provided below.

*(A) Extrusion*

Samples were extruded using a Coperion™ extruder ZSK26M co-rotating twin screw with a diameter of 26mm. The screw speed was set to 300 rpm. Samples were fed into the extruder by 4 K-Tron feeders (two single screw, a twin screw and a tray, all gravimetric). The barrel temperature in the zones was set to 260/270/280/290/300/300/300°C, with a die temperature of 290°C.

*(B) Drying*

Extruded components were next dried using a Langbein Amboss pellets dryer (Model WTS20 3B) for 2 hours at a temperature of approximately 120 °C.

*(C) Injection Molding*

Dried extruded components were next injection molded using an Engel™ Victory 120 with a clamp force of 120 MT, and an injection screw of 40 mm in diameter maximum injection volume 200 $cm^3$, without columns (Tie-bar-less). Injection molding occurred at a temperature of 290/300/300 °C with a nozzle temperature of 290 °C. The injection speed was 0.368 meters/sec. The holding pressure was 28.4 bar (10 seconds). The mold temperature was approximately 90°C. Cooling time was approximately 20 seconds.

*(D) Heat Aging*

Injection molded 2.55 mm color plaques were placed in an air circulating oven at 120°C for an extended period of time. The plaques stayed there for up to 2,000 hours and color was measured after 100, 300, 500, 1,000, 1,500, and 2,000 hours.

*(E) Color Measurement*

Color values (L*, a*, b* and YI) were calculated from the transmittance spectrum of a 2.55 mm color plaque between 360 nm and 760 nm. The spectrum was measured on a XRITE Color i7 device in transmission mode and UV excluded. The illuminant was D65, the standard observer function was 10°, and the reference color was air. The YI was measured prior to weathering tests.

Light transmission and haze were measured on the 2.55 mm color plaques using a Byk Gardner™ Dual Hazeguard. The light transmission and haze were measured according the ASTM D1003 method.

**EXAMPLE 1**

Eleven (11) different plaques were prepared with polycarbonate (Masterbatch 1) and various amounts of different antioxidants. A control plaque (Plaque 0) did not have any antioxidant. The plaques had a thickness of 2.55 mm. Table 2 shows the plaque number, the antioxidant, and the concentration of antioxidant in ppm. It is noted that AO2590 and 1-259 are the same antioxidant, but obtained from different suppliers (Songwon and BASF, respectively).

**Table 2**

| Plaque | Antioxidant | Concentration (ppm) |
|---|---|---|
| 0 | Control | 0 |
| 1 | AO 1010 | 222 |
| 2 | AO 1024 | 208 |
| 3 | AO 1035 | 242 |
| 4 | AO 1076 | 400 |
| 5 | AO 1098 | 240 |
| 6 | AO 1330 | 195 |
| 7 | AO 1790 | 176 |
| 8 | AO 2450 | 221 |
| 9 | AO 2590 | 241 |
| 10 | 1-259 | 241 |

The yellowness index (YI) of these plaques was measured at T0. The results are shown in FIG. 1. Plaques 9 and 10, which used HM-BDTBHP of Formula (II) as described above, had the lower YI, both being below 0.8. The next lowest YI was Plaque 4, which used IRGANOX 1076. However, Plaque 4 needed 400 ppm of antioxidant to obtain this result, while Plaques 9 and 10 only needed 241 ppm. Several of the tested antioxidants had a YI greater than that of the control plaque containing zero antioxidant.

**EXAMPLE 2**

Plaques using the IRGANOX 1076, IRGANOX 259, and SONGNOX 2590 antioxidants with the PC 102 polymer were prepared, with the amounts being varied. A control plaque (Plaque 0) did not have any antioxidant. The plaques had a thickness of 2.55 mm. Table 3 shows the plaque number, the antioxidant, and the concentration of antioxidant in ppm.

**Table 3**

| Plaque | Irganox 1076 | Songwon 590 | Irganox 259 |
|---|---|---|---|
| 0 | - | - | - |
| 1 | 400 | | |
| 4 | | 222 | |
| 5 | | | 222 |
| 8 | 800 | | |
| 9 | | | 444 |

The yellowness index (YI) of these plaques was measured at T0. The results are shown in FIG. 2. Comparing Plaques 1 and 8, doubling the amount of IRGANOX 1076 to 800 ppm still did not reduce the YI to a level below that of Plaque 4, which had only 222 ppm of the HM-BDTBHP antioxidant. Comparing Plaques 5 and 9, doubling the amount of the HM-BDTBHP antioxidant from 222 ppm to 444 ppm did not improve the YI.

## EXAMPLE 3

Twelve (12) different polycarbonate plaques were prepared using the PC 102 polymer. The IRGANOX 1076 antioxidant was compared against the HM-BDTBHP antioxidant (IRGANOX 259 or SONGNOX 2590). In addition, phosphite stabilizers (either IRGAFOS 168 or DOVERPHOS DS-9228) were added. The amounts of the antioxidants were varied. A control plaque (Plaque 0) did not have any antioxidant or phosphite stabilizer. The plaques had a thickness of 2.55 mm. Table 4 shows the plaque number, the antioxidant, the phosphite stabilizer, and the concentration of each in ppm.

**Table 4**

| Plaque | Irganox 1076 | Irganox 259 | Songwon 2590 | Irgafos 168 | Doverphos 9228 |
|---|---|---|---|---|---|
| 0 | | | | | |
| 1 | 400 | | | | |
| 2 | 400 | | | 200 | |
| 3 | 400 | | | | 200 |
| 4 | | 222 | | | |
| 5 | | | 222 | | |
| 6 | | 222 | | 200 | |
| 7 | | | 222 | | 200 |
| 8 | 800 | | | | |
| 9 | | 444 | | | |
| 10 | 800 | | | 200 | |
| 11 | | 444 | | 200 | |

The yellowness index (YI) of these plaques was measured at T0. Selected results are shown in **FIG. 3.** Comparing Plaques 2 and 10 to each other, doubling the amount of IRGANOX 1076 to 800 ppm still did not reduce the YI to a level below that of Plaque 11, which had 444 ppm of the HM-BDTBHP antioxidant. Comparing Plaques 6 and 11 to each other, doubling the amount of the HM-BDTBHP antioxidant from 222 ppm to 444 ppm did not improve the YI.

Comparing the plaques of Table 3 against Table 4, the addition of the phosphite stabilizer reduced the YI.

### Claims

1. A polycarbonate composition, comprising:

   a bisphenol A polycarbonate homopolymer formed by a melt process; and
   a hexamethylene-bis[3-(3,5-di-tert-butyl-4-hydroxyphenyl) propionate] antioxidant in an amount of 450 ppm or less;
   wherein the composition has a yellowness index (YI) of 1.3 or less, preferably of 0.8 or less when measured at 2.55 mm thickness; a melt volume rate of from 3 to 56 cc/10 min, when measured according to ASTM D1238; an endcap percentage of 65% to 90%; and a Fries content of from 200 ppm to 2750 ppm, wherein the composition further comprises from 50 ppm to 1000 ppm of a phosphite stabilizer, wherein the yellowness index and Fries content are determined using the methods disclosed in the present specification.

2. The composition of claim 1, wherein the phosphite stabilizer is tris(2,4-di-tert-butylphenyl)phosphite or bis(2,4-dicumylphenyl) pentaerythritol diphosphite.

3. The composition of claim 1 or 2 wherein the weight ratio of the hexamethylene-bis[3-(3,5-di-tert-butyl-4-hydroxyphenyl) propionate] antioxidant to the phosphite stabilizer is from 1:1 to 6:1.

4. The composition of any of claims 1-3, wherein the hexamethylene-bis[3-(3,5-di-tert-butyl-4-hydroxyphenyl) propionate] antioxidant is present in an amount of 50 ppm to 450 ppm, preferably from 50 ppm to 250 ppm..

5. The composition of any of claims 1-3, wherein the hexamethylene-bis[3-(3,5-di-tert-butyl-4-hydroxyphenyl) propionate] antioxidant is present in an amount of 250 ppm or less.

6. The composition of any of claims 1- 5, wherein the melt process used to form the polycarbonate polymer includes the addition of a quenching agent.

7. The composition of claim 6 , wherein the amount of the quenching agent added is 0.05 ppm to 100 ppm based on the total weight of the polycarbonate polymer.

8. The composition of any of claims 6-7, wherein the quenching agent is added along with a carrier to the polycarbonate polymer.

9. The composition of claim 8 , wherein the carriers is propylene carbonate, anisole, toluene, melted pentaerythritol tetrastearate (PETS), glycerol monostearate (GMS), or glycerol tristearate (GTS).

10. The composition of any of claims 6-9 , wherein the quenching agent is added to the process after formation of the polycarbonate polymer.

11. The composition of any of claims 1-10, wherein the polycarbonate polymer has a weight-average molecular weight of 15,000 to 80,000 daltons, according to polystyrene standards based on GPC.

12. An article molded from the polycarbonate composition of any of claims 1-10 .

13. The article of claim 12, wherein the article is a lens selected from an automotive lens, a collimator lens, an LED lens, and a light guide.

14. The article of claim 13 , wherein the lens is an automotive forward lens.

15. The article of claim 12 or 13 , wherein the lens comprises a hard coat on an outer surface, and optionally comprises an anti-fog coating on an inner surface.

## Patentansprüche

1. Polycarbonatzusammensetzung, die Folgendes umfasst:

   ein Bisphenol-A-Polycarbonat-Homopolymer, das durch ein Schmelzverfahren gebildet wird; und
   ein Hexamethylen-bis[3-(3,5-di-tert-butyl-4-hydroxyphenyl)propionat]antioxidans in einer Menge von 450 ppm oder weniger;
   wobei die Zusammensetzung Folgendes aufweist: einen Vergilbungsindex (YI) von 1,3 oder weniger, vorzugsweise von 0,8 oder weniger, wenn sie bei einer Dicke von 2,55 mm gemessen wird; eine Schmelzvolumenrate von 3 bis 56 $cm^3$/10 min, gemessen nach ASTM D1238; einen Endkappenprozentsatz von 65% bis 90%; und einen Fries-Gehalt von 200 ppm bis 2750 ppm, wobei die Zusammensetzung ferner 50 ppm bis 1000 ppm eines Phosphitstabilisators umfasst, wobei der Vergilbungsindex und der Fries-Gehalt unter Verwendung der in der vorliegenden Beschreibung offenbarten Verfahren bestimmt werden.

2. Zusammensetzung nach Anspruch 1, wobei der Phosphitstabilisator Tris(2,4-di-tert-butylphenyl)phosphit oder Bis(2,4-dicumylphenyl)pentaerythritoldiphosphit ist.

3. Zusammensetzung nach Anspruch 1 oder 2, wobei das Gewichtsverhältnis des Hexamethylen-Bis[3-(3,5-di-tert-butyl-4-hydroxyphenyl)propionat]antioxidans zum Phosphitstabilisator 1:1 bis 6:1 beträgt.

4. Zusammensetzung nach einem der Ansprüche 1 bis 3, wobei das Hexamethylen-bis[3-(3,5-di-tert-butyl-4-hydroxyphenyl)propionat]antioxidationsmittel in einer Menge von 50 ppm bis 450 ppm vorliegt, vorzugsweise von 50 ppm bis 250 ppm.

5. Zusammensetzung nach einem der Ansprüche 1 bis 3, wobei das Hexamethylen-bis[3-(3,5-di-tert-butyl-4-hydroxyphenyl)propionat]antioxidationsmittel in einer Menge von 250 ppm oder weniger vorliegt.

6. Zusammensetzung nach einem der Ansprüche 1 bis 5, wobei das zur Bildung des Polycarbonatpolymers verwendete Schmelzverfahren die Zugabe eines Quenchmittels umfasst.

7. Zusammensetzung nach Anspruch 6, wobei die Menge des zugesetzten Quenchmittels 0,05 ppm bis 100 ppm beträgt, bezogen auf das Gesamtgewicht des Polycarbonatpolymers.

8. Zusammensetzung nach einem der Ansprüche 6 bis 7, wobei das Quenchmittel zusammen mit einem Träger zu dem Polycarbonatpolymer gegeben wird.

9. Zusammensetzung nach Anspruch 8, wobei der Träger Propylencarbonat, Anisol, Toluol, geschmolzenes Pentaerythrittetrastearat (PETS), Glycerinmonostearat (GMS) oder Glyceroltristearat (GTS) ist.

10. Zusammensetzung nach einem der Ansprüche 6 bis 9, wobei das Quenchmittel dem Verfahren nach der Bildung des Polycarbonatpolymers zugesetzt wird.

11. Zusammensetzung nach einem der Ansprüche 1 bis 10, wobei das Polycarbonatpolymer ein Gewichtsmittel des Molekulargewichts von 15.000 bis 80.000 Dalton gemäß Polystyrolstandards auf der Basis von GPC aufweist.

12. Gegenstand, der aus der Polycarbonatzusammensetzung nach einem der Ansprüche 1 bis 10 geformt ist.

13. Gegenstand nach Anspruch 12, wobei der Gegenstand eine Linse ist, die aus einer Automobillinse, einer Kollimatorlinse, einer LED-Linse und einem Lichtleiter ausgewählt ist.

14. Gegenstand nach Anspruch 13, wobei die Linse eine Automobil-Vorwärtslinse ist.

15. Gegenstand nach Anspruch 12 oder 13, wobei die Linse eine harte Beschichtung auf einer Außenfläche und gegebenenfalls eine Antibeschlagbeschichtung auf einer Innenfläche umfasst.

## Revendications

1. Composition de polycarbonate, comprenant :

un homopolymère de polycarbonate bisphénol A formé par un processus de fusion ; et
un antioxydant hexaméthylène-bis[3-(3,5-di-tert-butyl-4-hydroxyphényl) propionate] en une quantité de 450 ppm ou moins ;
dans laquelle la composition a un indice de jaunissement (YI) d'1,3 ou moins, de préférence de 0,8 ou moins, lorsqu'il est mesuré à une épaisseur de 2,55 mm ; un taux volumique à l'état fondu de 3 à 56 cc/10 min, lorsqu'il est mesuré selon ASTM D1238 ; un pourcentage de coiffage d'extrémité de 65 % à 90 % ; et une teneur Fries de 200 ppm à 2750 ppm, dans laquelle la composition comprend en outre de 50 ppm à 1000 ppm d'un stabilisateur phosphite, dans laquelle l'indice de jaunissement et la teneur Fries sont déterminés en utilisant les procédés décrits dans la présente description.

2. Composition selon la revendication 1, dans laquelle le stabilisateur phosphite est : tris(2,4-di-tert-butylphényl)phosphite ou bis(2,4-dicumylphényl) pentaérythritol diphosphite.

3. Composition selon la revendication 1 ou 2, dans laquelle le rapport pondéral de l'antioxydant hexaméthylène-bis[3-(3,5-di-tert-butyl-4-hydroxyphényl) propionate] par rapport au stabilisateur phosphite est de 1:1 à 6:1.

4. Composition selon l'une quelconque des revendications 1 à 3, dans laquelle l'antioxydant hexaméthylène-bis[3-(3,5-di-tert-butyl-4-hydroxyphényl) propionate] est présent en une quantité de 50 ppm à 450 ppm, de préférence de 50 ppm à 250 ppm.

5. Composition selon l'une quelconque des revendications 1 à 3, dans laquelle l'antioxydant hexaméthylène-bis[3-(3,5-di-tert-butyl-4-hydroxyphényl) propionate] est présent en une quantité de 250 ppm ou moins.

6. Composition selon l'une quelconque des revendications 1 à 5, dans laquelle le processus de fusion utilisé pour former le polymère de polycarbonate inclut l'ajout d'un agent de refroidissement.

7. Composition selon la revendication 6, dans laquelle la quantité de l'agent de refroidissement ajouté est de 0,05 ppm à 100 ppm sur la base du poids total du polymère de polycarbonate.

8. Composition selon l'une quelconque des revendications 6 et 7, dans laquelle l'agent de refroidissement est ajouté, conjointement avec un entraîneur, au polymère de polycarbonate.

9. Composition selon la revendication 8, dans laquelle l'entraîneur est : carbonate de propylène, anisole, toluène, tétrastéarate de pentaérythritol fondu (PETS), monostéarate de glycérol (GMS), ou tristéarate de glycérol (GTS).

10. Composition selon l'une quelconque des revendications 6 à 9, dans laquelle l'agent de refroidissement est ajouté au processus après la formation du polymère de polycarbonate.

11. Composition selon l'une quelconque des revendications 1 à 10, dans laquelle le polymère de polycarbonate a un poids moléculaire moyen en poids de 15 000 à 80 000 daltons, selon les normes du polystyrène à base de GPC.

12. Article moulé à partir de la composition de polycarbonate de l'une quelconque des revendications 1 à 10.

13. Article selon la revendication 12, dans lequel l'article est une lentille sélectionnée parmi une lentille d'automobile, une lentille de collimateur, une lentille de LED, et un guide de lumière.

14. Article selon la revendication 13, dans lequel la lentille est une lentille avant d'automobile.

15. Article selon la revendication 12 ou 13, dans lequel la lentille comprend un revêtement dur sur une surface extérieure, et optionnellement comprend un revêtement antibuée sur une surface intérieure.

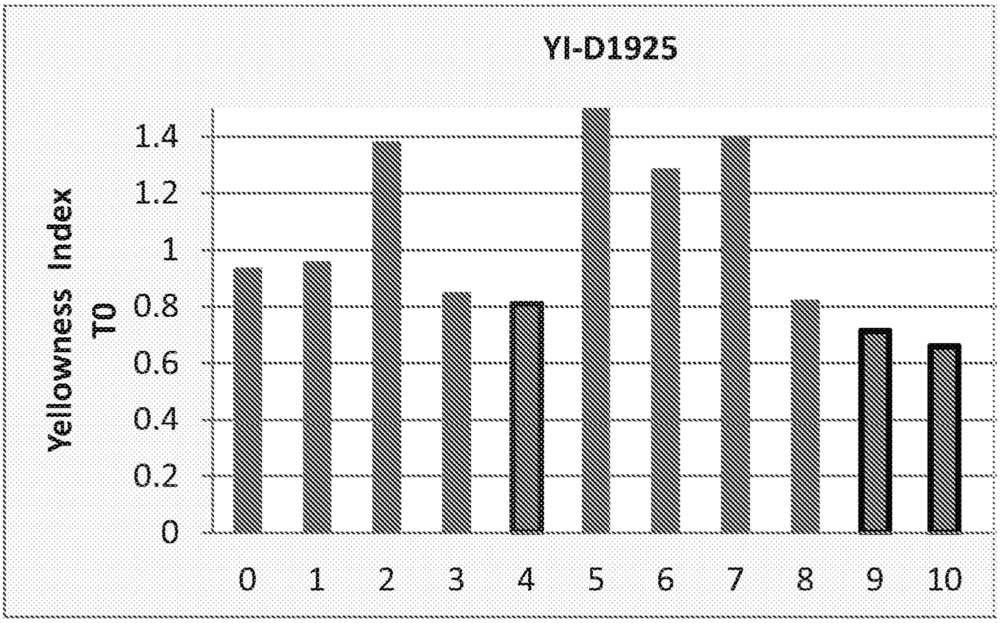
YI-D1925
Yellowness Index
T0
1.4
1.2
1
0.8
0.6
0.4
0.2
0
0
1
2
3
4
5
6
7
8
9
10

FIG. 1

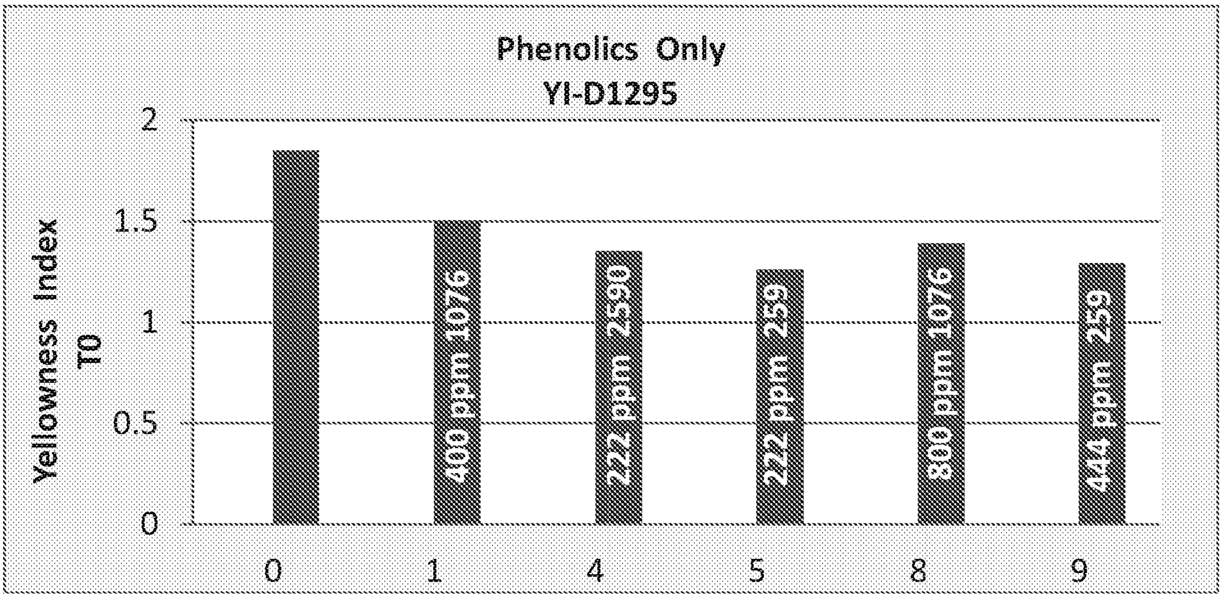
Phenolics Only
YI-D1295
Yellowness Index
T0
2
1.5
1
0.5
0
400 ppm 1076
222 ppm 2590
222 ppm 259
800 ppm 1076
444 ppm 259
0
1
4
5
8
9

FIG. 2

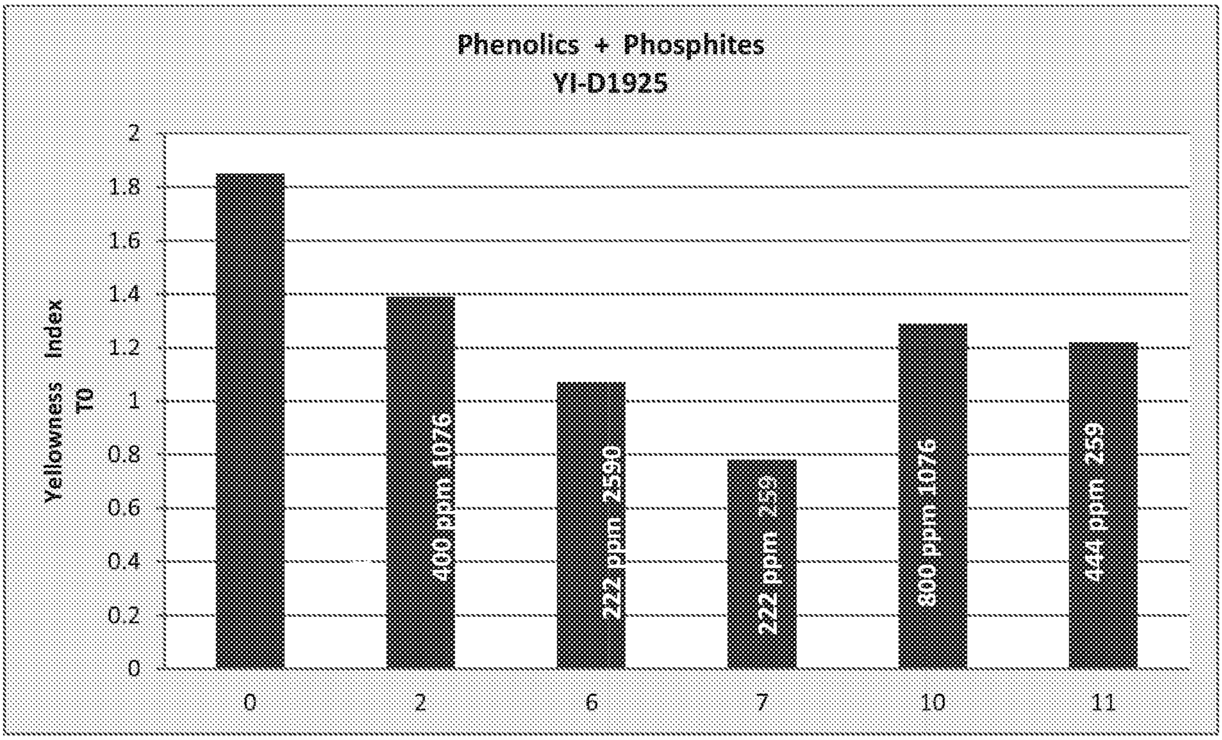
Phenolics + Phosphites
YI-D1925
Yellowness Index
T0
2
1.8
1.6
1.4
1.2
1
0.8
0.6
0.4
0.2
0
400 ppm 1076
222 ppm 2590
222 ppm 259
800 ppm 1076
444 ppm 259
0
2
6
7
10
11

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10025407 JP


### Non-patent literature cited in the description


- *CHEMICAL ABSTRACTS,* 35074-77-2
- *CHEMICAL ABSTRACTS,* 154862-43-8
- *CHEMICAL ABSTRACTS,* 31570-04-4
- *CHEMICAL ABSTRACTS,* 6683-19-8
- *CHEMICAL ABSTRACTS,* 32687-78-8
- *CHEMICAL ABSTRACTS,* 2082-79-3
- *CHEMICAL ABSTRACTS,* 23128-74-7
- *CHEMICAL ABSTRACTS,* 1709-70-2
- *CHEMICAL ABSTRACTS,* 40601-76-1
- *CHEMICAL ABSTRACTS,* 36443-68-2